# FASCICULE DE BREVET EUROPEEN

(11) **EP 0 447 293 B1**
(45) Date de publication et mention de la délivrance du brevet: **27.08.1997**
(21) Numéro de dépôt: 91400598.8
(22) Date de dépôt: 05.03.1991
(51) Int. Cl.: H04N 5/76, H04N 5/782, G11B 11/10, G11B 19/02, G11B 20/10, G11B 27/30

(54) **Récepteur-enregistreur d'émissions de télévision**
Empfänger zur Aufzeichnung von Fernsehsendungen
Receiver-recorder of television broadcasts

(30) Priorité: 16.03.1990 FR 9003385
(43) Date de publication de la demande: 18.09.1991
(73) Titulaire: THOMSON multimedia, 92400 Courbevoie (FR)
(72) Inventeur: Compoint, Philippe, F-92045 Paris la Défense (FR); Meunier, Paul-Louis, F-92045 Paris la Défense (FR); Staron, Alain, F-92045 Paris la Défense (FR); Uhde, Dietmar, F-92045 Paris la Défense (FR)
(74) Mandataire: Ruellan-Lemonnier, Brigitte

(56) Documents cités:
- EP-A- 0 325 330
- WO-A-88/07254
- WO-A-90/01838
- FR-A- 2 558 630
- JP-A- 2 044 569
- US-A- 3 766 328
- US-A- 3 793 639
- US-A- 4 774 597
- US-A- 4 841 502
- PATENT ABSTRACTS OF JAPAN, vol. 9, no. 62 (P-342)[1785], 19 mars 1985; & JP-A-59 195 357 (SONY K.K.) 06-11-1984
- PATENT ABSTRACTS OF JAPAN, vol. 5, no. 138 (P-78)[810], 2 septembre 1981; & JP-A-56 074 882 (NISSAN JIDOSHA K.K.) 20-06-1981
- PATENT ABSTRACTS OF JAPAN, vol. 9, no. 221 (P-386)[1944], 7 septembre 1985; & JP-A-60 080 169 (FUJITSU K.K.) 08-05-1985
- PATENT ABSTRACTS OF JAPAN, vol. 11, no. 116 (P-566)[2563], 11 avril 1987; & JP-A-61 261 890 (SONY CORP.) 19-11-1986
- IEEE, COMPUTERS IN PUBLIC SYSTEMS, 1973 IEEE INTERCON TECHNICAL PAPERS; PRESENTED AT THE INTERNATIONAL CONVENTION AND EXPOSITION, New York, 26-30 mars 1973, pages 16/2-1 - 16/2-8; R.W. CALFEE et al.: "Image storage and display using magnetic disc technology"
- PATENT ABSTRACTS OF JAPAN, vol. 12, no. 470 (P-798)[3317], 9 décembre 1988; & JP-A-63 188 859 (NEC CORP.) 04-08-1988
- PATENT ABSTRACTS OF JAPAN, vol. 7, no. 78 (P-188)[1223], 31 mars 1983; & JP-A-58 009 201 (TOKYO SHIBAURA DENKI K.K.) 19-01-1983

## Description

L'invention est relative à un appareil d'enregistrement de données, en particulier un récepteur-enregistreur d'émissions de télévision.

Le magnétoscope est aujourd'hui un appareil très répandu. Il est surtout utilisé pour visualiser des cassettes préenregistrées par des éditeurs spécialisés. En général ces appareils permettent l'enregistrement automatique d'émissions de télévision et disposent, à cet effet, de moyens pour programmer à l'avance de tels enregistrements. Mais la programmation d'un magnétoscope implique des opérations qui sont souvent ressenties comme complexes par l'utilisateur; en outre il faut prendre garde au fait qu'une cassette soit introduite dans l'appareil. C'est pourquoi les magnétoscopes sont moins utilisés pour l'enregistrement d'émissions de télévision que pour la visualisation de cassettes préenregistrées.

On connait par le document JP-A-2-044569 un appareil d'enregistrement d'images de télévision sur un disque magnéto-optique à l'aide d'une tête d'écriture en fonctionnement permanent. Une tête de lecture permet de restituer les images enregistrées sur le disque. Par ailleurs, on connait également par le document EP-A-0325330 un appareil enregistreur-lecteur de disque utilisant un signal d'information de position contrôlé par la modulation des pistes du disque.

La présente invention à pour objet de réaliser un appareil d'enregistrement de données sur un support réutilisable avec au moins une tête d'enregistrement. cet appareil comporte un moyen d'indexage pour inscrire périodiquement sur le support réutilisable un code variant chaque fois que l'enregistrement est repris au début du support, de façon à distinguer un enregistrement recent d'un enregistrement plus ancien partiellement recouvert par l'enregistrement recent. Le code utilisé peut être une variable binaire. De préférence, l'appareil comprend un moyen qui, après une interruption dans l'enregistrement, permet la poursuite dudit enregistrement après le dernier emplacement du support correspondant au code enregistré au début du support.

Dans une application particulièrement intéressante, l'invention facilite l'enregistrement d'émissions de télévisions ou la visualisation en différé de telles émissions.

Dans une réalisation intéressante le récepteur-enregistreur peut comporter des moyens pour que l'appareil soit constamment en veille (ou actif) afin d'enregistrer en permanence des émissions de télévision d'au moins un canal sur un support d'enregistrement réversible (réutilisable) de grande capacité.

Avec un tel appareil, l'utilisateur n'a pas besoin d'effectuer d'opérations de programmation. Il lui suffira en général de le laisser branché sur le secteur pour qu'il reste en veille. Cependant on peut prévoir une programmation simplifiée qui consiste à choisir le (ou les) canal(aux) à enregistrer. Il suffit alors par exemple d'affecter à chaque canal une touche et la commande de l'enregistreur est alors aussi aisée que celle d'un simple téléviseur. De préférence l'appareil selon l'invention est agencé pour permettre l'enregistrement simultané de plusieurs canaux.

Dans une réalisation intéressante, l'appareil de réception et d'enregistrement de données peut comporter des moyens pour que l'appareil soit constamment en veille afin d'enregistrer en permanence des émissions de télévision d'au moins un canal sur un support d'enregistrement réversible à accès aléatoire associé à des moyens d'inscription et de reproduction assurant une exploration sans usure de la plage d'emmagasinage du support, l'enregistrement d'émissions étant effectué sans intervention d'un utilisateur de façon à disposer lors de la reproduction d'une tranche d'émission(s) suffisamment importante pour permettre la visualisation et/ou l'enregistrement en différé et en entier de l'une au moins des émissions.

Dans une réalisation intéressante, pour minimiser les risques d'erreur de manipulation (ou d'utilisation) le support est non aisément amovible de l'appareil, comme clans un enregistreur (ou mémoire informatique) à disque dur.

De préférence on n'effectue un enregistrement que lorsqu'une émission est présente. C'est pourquoi, dans une réalisation, l'appareil comporte un moyen de détection de présence d'émissions. Ce détecteur est constitué, par exemple, par un organe d'identification de la présence de la fréquence de balayage ligne.

Le support d'enregistrement ayant une capacité limitée on prévoit une détection de remplissage de la mémoire que constitue ce support qui, lorsque la mémoire est complètement remplie, commande l'arrêt de l'enregistrement ou le retour au début de la mémoire afin d'effacer l'information inscrite au début et de la remplacer par une nouvelle information.

La partie enregistreur est de préférence un enregistreur de type magnéto-optique, le support d'enregistrement étant sous forme d'un disque. L'avantage d'un tel enregistreur est, d'une part, que le support et la tête d'enregistrement/lecture ne subissent pas d'usure mécanique, puisqu'il n'y a pas de contact entre ces éléments, et, d'autre part, que les matériaux magnétiques utilisés dans les disques magnéto-optiques sont infiniment réversibles (réutilisables). En outre un disque magnéto-optique est de grande capacité et on peut prévoir plusieurs disques dans un même enregistreur.

Dans ce qui suit, sauf stipulation contraire, on se référera uniquement à un enregistreur de type magnéto-optique.

Pour la sélection des émissions à visualiser on prévoit un moyen de défilement rapide pour localiser rapidement le début de l'émission choisie par l'utilisateur.

De préférence l'enregistreur-lecteur comporte au moins une tête d'enregistrement et au moins une tête de lecture, et des moyens permettant d'utiliser indépendamment l'une de l'autre la tête de lecture et la tête d'enregistrement. Il est alors ainsi possible - en utilisant des plages distinctes du support - d'enregistrer une émission reçue tout en visualisant (sur un écran), indépendamment, une émission déjà enregistrée.

Bien que, comme expliqué ci-dessus, le but principal de l'invention soit de faciliter la manipulation de l'enregistreur, on peut cependant prévoir les mêmes possibilités de programmation qu'avec un magnétoscope classique, en combinaison avec l'enregistrement en permanence. Ainsi dans une réalisation on prévoit un moyen de programmation pour enregistrer une émission ultérieure déterminée et des moyens pour qu'ensuite cette émission soit gardée en mémoire quand on réenregistre sur le support d'information.

On peut associer une horloge à l'enregistreur pour inscrire en permanence les informations de date associées aux émissions de télévision. Il est ensuite ainsi possible d'atteindre quasi immédiatement le début d'une émission en affichant la date de ce début, la recherche étant effectuée de la même manière que le début d'un morceau d'enregistrement dans un disque de type compact (audio ou vidéo).

Dans une réalisation intéressante, le lecteur/enregistreur magnéto-optique comporte deux têtes d'écriture, l'une pour l'enregistrement en permanence et l'autre pour reloger en un autre emplacement de la mémoire des émissions déjà enregistrées.

Dans une réalisation intéressante, l'appareil d'enregistrement de données sur un support, est par exemple de type magnétique ou magnéto-optique, et est alimenté en courant par le secteur, comporte une source d'énergie de secours, tel qu'un accumulateur-tampon de faible capacité, des moyens de détection d'une interruption d'alimentation et des moyens, alimentés par la source de secours, pour inscrire un code d'arrêt d'enregistrement à l'emplacement du support en cours d'inscription.

D'autres caractéristiques et avantages de l'invention apparaîtront avec la description de certains de ses autres modes de réalisation, celle-ci étant effectuée en se référant aux dessins ci-annexés sur lesquels :
- la figure 1 est un schéma d'un appareil selon l'invention,
- les figures 2 et 3 sont des figures analogues au schéma de la figure 1 pour des variantes, et
- la figure 4 est un schéma de disque enregistré.

Dans tous les exemples, le support d'enregistrement est de type magnéto-optique sous forme d'un disque tournant 10 d'axe vertical 11.

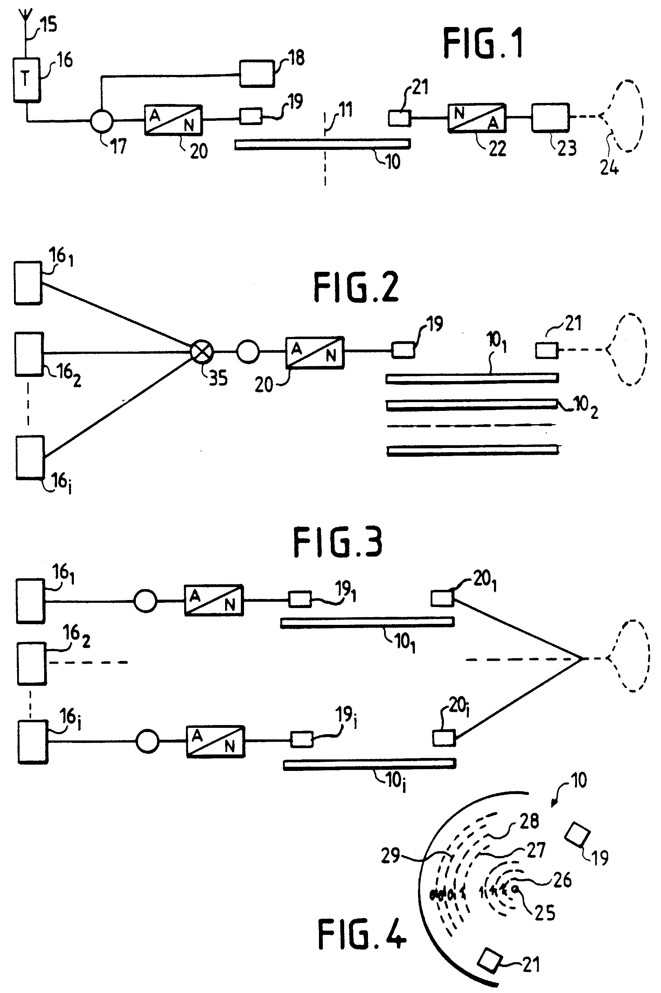

On se réfère maintenant à la figure 1 : l'enregistreur/lecteur reçoit des émissions de télévision par l'intermédiaire d'une antenne 15 ou d'un câble. Il comporte de façon classique un tuner ou syntoniseur 16 associé à des moyens de démodulation de son et d'image et destiné à recevoir une émission de télévision via un canal. Un tel circuit est classique dans les récepteurs de télévision ou les magnétoscopes.

A la sortie du tuner 16 on prévoit un élément 17 qui détecte la présence, ou l'absence, de signaux à fréquence ligne et dont le rôle est de commander un bloc 18 de commande d'enregistrement. Si une émission est détectée, le bloc 18 permet l'enregistrement et transmet les signaux de sortie du tuner 16 vers une tête d'enregistrement 19 par l'intermédiaire d'un convertisseur analogique/numérique 20.

En l'absence d'émissions reçues l'élément 17 inhibe le fonctionnement de l'enregistreur.

L'appareil comporte également une tête de lecture 21 éloignée de la tête d'enregistrement 19 afin que le champ magnétique produit par la tête d'enregistrement ne perturbe pas la lecture.

La tête de lecture 21 est reliée à un convertisseur numérique/analogique 22 et à des circuits classiques 23 pour la visualisation des images sur un tube 24 de télévision et pour la reproduction sonore.

Pour la partie enregistrement, l'appareil ne comporte en principe aucune commande à la portée de l'utilisateur. L'appareil fonctionne, c'est-à-dire enregistre des émissions, tant qu'il est alimenté en énergie électrique.

Par contre pour la reproduction, l'appareil comprend les commandes habituelles d'un récepteur de télévision avec, en outre, la possibilité de lire l'enregistrement à partir de toute plage désirée du disque. Dans ce cas la commande est celle que l'on trouve classiquement dans un lecteur de disque compact ou dans un lecteur de vidéodisque.

Dans une variante, l'enregistrement, et donc la lecture, sont effectués de façon analogique.

L'enregistrement commence par exemple à partir du centre et se termine à la périphérie du disque. Quand le disque a été complètement inscrit, la tête d'enregistrement 19 revient au centre du disque et efface les émissions antérieurement enregistrées et inscrit les nouvelles. En variante, quand le disque est complètement rempli, on prévoit une commande automatique agissant sur le circuit 18 pour interrompre l'enregistrement. Cette interruption se traduit par exemple par l'allumage d'un voyant sur le devant de l'appareil. Pour recommencer l'enregistrement on appuie sur un poussoir de réarmement.

Pour tenir compte des interruptions d'alimentation en énergie électrique, telles que les pannes de secteur, on prévoit un système de codage des informations qui, à chaque tour du disque, inscrit une information, par exemple un chiffre binaire et cette information change quand on reprend l'enregistrement au début du disque. Ainsi, lors du premier remplissage à chaque rotation on affecte le chiffre 0, lors lu second remplissage à chaque tour on affecte le chiffre 1, lors du troisième remplissage à chaque tour on affecte de nouveau le chiffre 0, etc...

Sur la figure 4 on a représenté un disque 10 sur lequel on a commencé l'enregistrement en partant du centre 25 et à chaque tour 26 on affecte le chiffre 1. Le dernier tour inscrit a la référence 27. Ensuite les tours suivants 28, 29, etc... contiennent aussi des enregistrements. Mais ceux-ci sont affectés du chiffre binaire 0 correspondant au remplissage précédent.

De cette manière, en cas d'interruption d'alimentation en énergie électrique, la tête 19 d'enregistrement et lecture sait déterminer l'endroit, à savoir le tour 27, du disque où s'est terminé l'enregistrement puisque c'est le dernier tour (en partant du centre) d'indice 1.

Dans une variante l'appareil comporte une source d'énergie de secours tel qu'un accumulateur tampon (non représenté) de faible capacité qui permet la poursuite du fonctionnement de l'appareil pendant un temps déterminé, relativement court, par exemple 30 secondes. Pendant cette durée de temporisation un circuit permet d'inscrire une information sur l'endroit où est effectué l'enregistrement. A la reprise de l'alimentation, le code enregistré est aisément reconnaissable.

Dans l'exemple le codage des émissions de télévision s'effectue de façon analogue au codage MAC-PAQUET en ce qui concerne le son et la séparation de la luminance et de la chrominance. Toutefois, à la différence des normes MAC, les informations vidéo sont enregistrées sous forme numérique et non sous forme analogique. Ainsi au cours d'une ligne on transmet d'abord les informations numériques de son, puis les informations numériques de chrominance et enfin les informations numériques de luminance.

En variante l'enregistrement se fait sous forme analogique.

En complément, ou à la place, du détecteur 17 de reconnaissance d'un signal de télévision à la fréquence ligne on prévoit un élément (non représenté) de reconnaissance d'un signal pilote fourni par l'émetteur et représentant le début d'une émission de télévision.

Dans le mode de réalisation représenté sur la figure 2, l'appareil est destiné à permettre l'enregistrement simultané de plusieurs canaux de télévision. A cet effet il comporte un nombre i de sections récepteurs à tuners 16₁, 16₂... 16ᵢ égal au nombre de canaux que l'on désire recevoir et plusieurs disques 10₁, 10₂, etc... augmentant la capacité d'enregistrement.

Dans cet exemple les signaux fournis, par les sections à tuners 16₁, 16₂,..., au convertisseur analogique/numérique 20 passent à travers un multiplexeur 35. De cette manière il est possible d'enregistrer simultanément plusieurs canaux de télévision sur un même disque 10₁ et on ne prévoit alors qu'une seule tête d'enregistrement 19 et une seule tête de lecture 21. Lorsqu'un disque 10₁ est complètement rempli d'informations, un mécanisme permet le déplacement de la tête d'enregistrement 19 du disque 10₁ vers le disque suivant 10₂. De même un mécanisme de transfert est prévu pour permettre le déplacement de la tête de lecture 21 vers un autre disque.

Dans l'exemple représenté sur la figure 3, le nombre de têtes d'enregistrement 19₁, 19₂, etc... 19ᵢ est égal au nombre de sections à tuners 16₁, 16₂... 16ᵢ. Dans ce cas le nombre de disques 10₁ , 10₂... 10ᵢ est le même, à chaque disque étant affectée une tête d'enregistrement. De même à chaque disque est affectée une tête de lecture 21₁...21ᵢ.

Avec cette réalisation il n'est pas nécessaire de prévoir un multiplexeur comme pour l'exemple de la figure 2.

Quel que soit le mode de réalisation il est avantageux de prévoir que la tête d'enregistrement 19 permette la visualisation de l'émission qui est en cours d'enregistrement, par exemple par incrustation dans l'image lue avec la tête de lecture ou dans l'image reçue directement par le tuner.

## Revendications

1. Appareil d'enregistrement de données sur un support réutilisable (10) avec au moins une tête d'enregistrement (19), caractérisé en ce qu'il comporte un moyen d'indexage pour inscrire périodiquement sur ledit support un code variant chaque fois que l'enregistrement est repris au début dudit support, de façon à distinguer un enregistrement récent d'un enregistrement plus ancien partiellement recouvert par l'enregistrement récent.

2. Appareil selon la revendication 1, caractérisé en ce que ledit code est une variable binaire.

3. Appareil selon la revendication 1 ou 2, caractérisé en ce qu'il comporte un moyen de détection dudit code.

4. Appareil selon la revendication précédente, caractérisé en ce qu'il comporte également un moyen qui, après une interruption dans l'enregistrement, permet la poursuite dudit enregistrement après le dernier emplacement du support correspondant au code enregistré au début du support.

5. Appareil selon l'une des revendications précédentes, caractérisé en ce qu'il comporte une source d'énergie de secours tels qu'un accumulateur tampon de faible capacité, des moyens de détection d'une interruption d'alimentation dudit appareil et des moyens, alimentés par ladite source de secours, pour inscrire un code d'arrêt d'enregistrement à l'emplacement du support (10) en cours d'inscription.

6. Appareil selon l'une des revendications précédentes, caractérisé en ce qu'il comporte une horloge pour enregistrer des informations de date en même temps que les données sur le support.

7. Appareil selon la revendication 6, caractérisé en ce qu'il comporte un moyen de recherche rapide basé sur les informations de date.

8. Appareil selon l'une des revendications 6 ou 7, caractérisé en ce qu'il comporte un moyen de programmation pour empêcher l'effacement de données présélectionnées.

9. Appareil selon l'une des revendications précédentes, caractérisé en ce qu'il comprend au moins un tête de lecture (21) et au moins une tête d'enregistrement (19) susceptibles d'agir sur des plages distinctes du support.

10. Appareil selon l'une des revendications précédentes, caractérisé en ce qu'il comporte un moyen (17) de détection de remplissage complet de la mémoire constituée par le support d'enregistrement.

11. Appareil selon la revendication 10, caractérisé en ce qu'il comprend des moyens pour ramener la tête de d'enregistrement (19) au début dudit support (10) lorsque ledit moyen de détection de remplissage détecte un remplissage complet.

12. Appareil selon l'une des revendications précédentes, caractérisé en ce qu'il comporte deux têtes d'écriture, l'une pour ledit enregistrement, l'autre pour reloger des parties d'enregistrement déjà effectuées vers d'autres plages du support.

13. Appareil selon l'une des revendications précédentes, caractérisé en ce qu'il comprend des moyens pour reprendre l'enregistrement des données au début du support lorsque la fin de ce suppport a été atteinte par la tête d'enregistrement.

14. Appareil selon l'une des revendications précédentes, caractérisé en ce que ledit support d'enregistrement comprend au moins un disque magnéto-optique (10).

15. Appareil selon l'une des revendications précédentes, caractérisé en ce qu'il comprend des moyens (15, 16) de réception d'émissions de télévision, les signaux reçus constituant lesdites données à enregistrer sur ledit support (10).

16. Appareil selon la revendication 15, caractérisé en ce qu'il comprend un moyen (17) de détection de présence d'émissions de télévision, ce moyen commandant un organe (18) de commande d'enregistrement en cas de présence d'émission.

## Patentansprüche

1. Gerät zur Aufzeichnung von Daten auf einem wiederverwendbaren Träger (10) mit wenigstens einem Schreibkopf (19), dadurch gekennzeichnet, daß sie ein Indexierungsmittel aufweist, um periodisch auf den Träger einen Kode zu schreiben, der sich jedesmal, wenn die Aufzeichnung am Anfang des Trägers wieder aufgenommen wird, ändert, so daß eine neue Aufzeichnung von einer älteren Aufzeichnung, die teilweise von der neuen Aufzeichnung überdeckt wird, zu unterschieden ist.

2. Gerät nach Anspruch 1, dadurch gekennzeichnet, daß der Kode eine binäre Variable ist.

3. Gerät nach Anspruch 1 oder 2, dadurch gekennzeichnet, daß sie ein Mittel zum Erfassen des Kodes aufweist.

4. Gerät nach dem vorhergehenden Anspruch, dadurch gekennzeichnet, daß sie ebenfalls ein Mittel aufweist, das nach einer Unterbrechung während einer Aufzeichnung die Fortsetzung der Aufzeichnung im Anschluß an die letzte Stelle des Trägers gestattet, die dem am Anfang des Trägers aufgezeichneten Kode entspricht.

5. Gerät nach einem der vorhergehenden Ansprüche, dadurch gekennzeichnet, daß sie eine Hilfsenergiequelle aufweist, wie beispielsweise einen Pufferakkumulator geringer Kapazität, Mittel zum Erfassen einer Unterbrechung der Versorgung der Gerät sowie Mittel, die von der Hilfsenergiequelle versorgt werden, zum Aufzeichnen eines Kodes für den Abbruch der Aufzeichnung an der Stelle des Trägers (10) während der Aufzeichnung.

6. Gerät nach einem der vorhergehenden Ansprüche, dadurch gekennzeichnet, daß sie eine Uhr umfaßt, um gleichzeitig mit den Daten Zeitinformationen auf den Träger aufzuzeichnen.

7. Gerät nach Anspruch 6, dadurch gekennzeichnet, daß sie ein Mittel zur schnellen Suche aufweist, das sich auf die Zeitinformationen stützt.

8. Gerät nach einem der Ansprüche 6 oder 7, dadurch gekennzeichnet, daß sie ein Programmierungsmittel aufweist, um die Löschung der vorausgewählten Daten zu verhindern.

9. Gerät nach einem der vorhergehenden Ansprüche, dadurch gekennzeichnet, daß sie wenigstens einen Lesekopf (21) sowie wenigstens einen Aufnahmekopf (19) aufweist, die in der Lage sind, auf unterschiedliche Bereiche des Trägers einzuwirken.

10. Gerät nach einem der vorhergehenden Ansprüche, dadurch gekennzeichnet, daß sie ein Mittel (17) zum Erfassen der vollständigen Belegung des Speichers aufweist, der von dem Aufzeichnungsträger gebildet wird.

11. Gerät nach Anspruch 10, dadurch gekennzeichnet, daß sie Mittel aufweist, um den Aufnahmekopf (19) an den Anfang des Trägers (10) zurückzuführen, wenn das Mittel zum Erfassen der Belegung eine vollständige Belegung erfaßt.

12. Gerät nach einem der vorhergehenden Ansprüche, dadurch gekennzeichnet, daß sie zwei Schreibköpfe aufweist, einen für die Aufzeichnung, den anderen zum Verlagern der bereits vorhandenen Aufzeichnungsteile in andere Bereiche des Trägers.

13. Gerät nach einem der vorhergehenden Ansprüche, dadurch gekennzeichnet, daß sie Mittel aufweist, um das Aufzeichnen von Daten am Anfang des Trägers wiederaufzunehmen, wenn das Ende des Trägers von dem Aufnahmekopf erreicht wurde.

14. Gerät nach einem der vorhergehenden Ansprüche, dadurch gekennzeichnet, daß der Aufzeichnungsträger wenigstens eine magnetooptische Platte (10) aufweist.

15. Gerät nach einem der vorhergehenden Ansprüche, dadurch gekennzeichnet, daß sie Mittel (15, 16) zum Empfang von Fernsehsendungen aufweist, wobei die empfangenen Signale die auf dem Träger (10) aufzuzeichnenden Daten darstellen.

16. Gerät nach Anspruch 15, dadurch gekennzeichnet, daß sie ein Mittel (17) zur Erfassung des Vorhandenseins von Fernsehsendungen aufweist, wobei dieses Mittel im Falle des Vorhandenseins einer Sendung ein Organ (18) zur Steuerung der Aufzeichnung ansteuert.

## Claims

1. Apparatus for recording data on a reusable medium (10) with at least one recording head (19), characterized in that it includes an indexing means for periodically writing to the said medium a code varying each time recording is restarted at the beginning of the said medium, so as to distinguish a recent recording from an older recording partially overlapped by the recent recording.

2. Apparatus according to Claim 1, characterized in that the said code is a binary variable.

3. Apparatus according to Claim 1 or 2, characterized in that it includes a means of detecting the said code.

4. Apparatus according to the preceding claim, characterized in that it also comprises a means which, after an interruption in the recording, allows the said recording to be continued after the last location of the medium corresponding to the code recorded at the beginning of the medium.

5. Apparatus according to one of the preceding claims, characterized in that it comprises a backup energy source such as a buffer accumulator of low capacity, means of detecting an interruption in supply to the said apparatus and means, supplied by the said backup source, for writing a code for stopping the recording at the location of the medium (10) being written to.

6. Apparatus according to one of the preceding claims, characterized in that it comprises a clock for recording date information, at the same time as the data, onto the medium.

7. Apparatus according to Claim 6, characterized in that it comprises a means of fast searching based on the date information.

8. Apparatus according to either of Claims 6 and 7, characterized in that it comprises a programming means for preventing the erasure of preselected data.

9. Apparatus according to one of the preceding claims, characterized in that it includes at least one reading head (21) and at least one recording head (19) which are able to act on separate areas of the medium.

10. Apparatus according to one of the preceding claims, characterized in that it comprises a means (17) of detecting complete filling of the memory constituted by the recording medium.

11. Apparatus according to Claim 10, characterized in that it comprises means for bringing the recording head (19) back to the beginning of the said medium (10) when the said means of detecting filling detects complete filling.

12. Apparatus according to one of the preceding claims, characterized in that it includes two write heads, one for the said recording, the other for relocating already made portions of recording to other areas of the medium.

13. Apparatus according to one of the preceding claims, characterized in that it comprises means for restarting the recording of data at the beginning of the medium when the end of this medium has been reached by the recording head.

14. Apparatus according to one of the preceding claims, characterized in that the said recording medium includes at least one magnetooptic disk (10).

15. Apparatus according to one the of the preceding claims, characterized in that it comprises means (15, 16) for receiving television transmissions, the signals received constituting the said data to be recorded on the said medium (10).

16. Apparatus according to Claim 15, characterized in that it includes a means (17) of detecting the presence of television transmissions, this means controlling an element (18) for activating recording in the event of transmission being present.
